# EUROPEAN PATENT SPECIFICATION

(11) **EP 3 485 361 B1**
(45) Date of publication and mention of the grant of the patent: **22.11.2023**
(21) Application number: 17828476.6
(22) Date of filing: 13.07.2017
(51) Int. Cl.: G06F 3/04886, G06F 3/04883, G06F 3/0482, G06F 3/023

(54) **PRESSURE-BASED GESTURE TYPING FOR A GRAPHICAL KEYBOARD**
DRUCKBASIERTES GESTENTIPPEN FÜR EINE GRAFISCHE TASTATUR
FRAPPE DE GESTES BASÉE SUR LA PRESSION POUR UN CLAVIER GRAPHIQUE

(30) Priority: 14.07.2016 US 201615210401
(43) Date of publication of application: 22.05.2019
(73) Proprietor: Google LLC, Mountain View, CA 94043 (US)
(72) Inventor: BI, Xiaojun, Mountain View, CA 94043 (US)
(74) Representative: Chettle, John Edward
(86) International application number: PCT/US2017/041968
(87) International publication number: WO 2018/013832

(56) References cited:
- US-A1- 2003 165 801
- US-A1- 2005 146 508
- US-A1- 2010 238 125
- US-A1- 2010 241 984
- US-A1- 2014 098 023
- US-A1- 2014 101 594
- US-A1- 2014 104 177
- US-A1- 2014 317 547
- US-A1- 2014 359 515

## Description

### BACKGROUND

Some computing devices provide a graphical keyboard for inputting text as part of a graphical user interface. A "gesture keyboard" is one example of a graphical keyboard that can enable a computing device to determine a string of text based on a continuous gesture input. The continuous gesture input may include a single, continuous gesture spanning locations of multiple keys of the gesture keyboard rather than multiple, individual tapgesture inputs entered at each of the individual locations of the multiple keys. A gesture keyboard may be preferable to users who prefer to swipe across-rather than merely tap on- individual keys of a graphical keyboard.

Some computing devices have adopted a one-gesture-for-one-word model for gesture keyboards. That is, these computing devices map a single, continuous gesture to only a single word, and any interruption of the gesture (e.g., lifting a finger from the gesture keyboard) may be interpreted by the computing device as signaling the completion of the entered word. This approach may have certain drawbacks, however. For example, a gesture to select a relatively long word with many characters (e.g., "supermarket") would require continuous contact with the gesture keyboard for the entirety of the lengthy word, potentially resulting in user fatigue and increased cognitive difficulty that can aggravate input errors, decrease input accuracy, and slow the speed of input using the gesture keyboard. United States patent application publication no. US 2014/098023 A1 presents "incremental multi-touch gesture recognition." United States patent application publication no. US 2010/241984 A1 presents "an apparatus, comprising a shorthand-aided rapid keyboarding enabled touchscreen" which is "configured to receive a user input." United States patent application publication no. US 2010/238125 A1 presents "various methods for discontinuous shapewriting". United States patent application publication no. US 2003/165801 A1 presents "a method of interpreting keypad input".

### SUMMARY

In one example, the disclosure is directed to a method that includes outputting, by a computing device and for display, a graphical keyboard comprising a plurality of keys. The method further includes receiving, by the computing device, an indication of a first gesture selecting a first sequence of one or more keys from the plurality of keys, and receiving, by the computing device, an indication of a second gesture selecting a second sequence of one or more keys from the plurality of keys. The method further includes, determining, by the computing device and based on pressure information associated with the indication of the second gesture, a candidate word that includes a combination of the first sequence of one or more keys from the plurality of keys and the second sequence of one or more keys from the plurality of keys, and outputting, by the computing device and for display, the candidate word that includes the combination of the first sequence of one or more keys from the plurality of keys and the second sequence of one or more keys from the plurality of keys.

In another example, a computing device may include at least one processor, and at least one module operable by the at least one processor to output, for display, a graphical keyboard comprising a plurality of keys. The at least one module may be operable to receive an indication of a first gesture selecting a first sequence of one or more keys from the plurality of keys, and receive an indication of a second gesture selecting a second sequence of one or more keys from the plurality of keys. The module may be further operable to determine, based on pressure information associated with the indication of the second gesture, a candidate word that includes a combination of the first sequence of one or more keys from the plurality of keys and the second sequence of one or more keys from the plurality of keys, and output, for display, the candidate word that includes the combination of the first sequence of one or more keys from the plurality of keys and the second sequence of one or more keys from the plurality of keys.

In another example, a computer-readable storage medium is encoded with instructions that, when executed, cause at least one processor of a computing device to output, for display, a graphical keyboard comprising a plurality of keys. The instructions may cause the processor to receive an indication of a first gesture selecting a first sequence of one or more keys from the plurality of keys, and receive an indication of a second gesture selecting a second sequence of one or more keys from the plurality of keys. The instructions may further cause the processor to determine, based on pressure information associated with the indication of the second gesture, a candidate word that includes a combination of the first sequence of one or more keys from the plurality of keys and the second sequence of one or more keys from the plurality of keys, and output, for display, the candidate word that includes the combination of the first sequence of one or more keys from the plurality of keys and the second sequence of one or more keys from the plurality of keys.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example computing device configured to determine text using pressure information associated with a gesture input at a gesture keyboard, in accordance with one or more aspects of the present disclosure.
FIG. 2 is a block diagram illustrating an example computing device configured to determine text using pressure information associated with a gesture input at a gesture keyboard, in accordance with one or more aspects of the present disclosure.
FIG. 3 is a block diagram illustrating another example computing device configured to determine text using pressure information associated with a gesture input at a gesture keyboard, in accordance with one or more techniques of the present disclosure.
FIG. 4 is a conceptual diagram illustrating example graphical user interface for inputting words using pressure information associated with a gesture input at a gesture keyboard, in accordance with one or more aspects of the present disclosure.
FIG. 5 is a flowchart illustrating an example operation of the computing device configured to determine text using pressure information associated with a gesture input at a gesture keyboard, in accordance with one or more aspects of the present disclosure.
FIG. 6 is a flowchart illustrating another example operation of the computing device, in accordance with one or more aspects of the present disclosure.

### DETAILED DESCRIPTION

In general, this disclosure is directed to techniques for determining words based at least in part on an amount of pressure associated with a portion of a gesture input associated with one or more graphical keys of a gesture keyboard that is output by a computing device for display. An example computing device may initially output a gesture keyboard for display at a display device. The example computing device may detect a gesture made by an input object (e.g., a finger or stylus) at locations on a presence-sensitive device that correspond to locations of keys of the gesture keyboard that are displayed by the display device.

Based on the detected gesture, the example computing device may determine a selection of one or more of the keys and then use this selection of keys and pressure information associated with the gesture input to determine one or more words from a lexicon that correspond to the gesture input. That is, unlike other computing devices that have adopted a one-gesture-for-one-word model (e.g., always mapping a single, continuous gesture spanning locations of multiple keys of the gesture keyboard to only a single word with an interruption of the gesture input denoting an end to the desired word), the example computing device may, before mapping a selection of keys to a word in a lexicon, determine whether the selection of keys corresponds to an input for entering either a single word or multiple words by using pressure information obtained about the gesture input (e.g., from the presence-sensitive input device).

In some instances, the example computing device may infer whether a single gesture is an input for a single word or for multiple words based on pressure information, regardless of whether the selection of keys includes a selection of a space bar key or other end-of-word identifier. For example, the example computing device may determine that a given gesture input is intended to input two words by identifying the start of the second of two words based on a determination that a middle portion of the gesture was entered with a "high" pressure (e.g., a pressure that exceeds a particular pressure threshold) as opposed to a "normal" or "low" pressure (e.g., a pressure that does not exceed the particular pressure threshold).

In some instances, the example computing device may use pressure information obtained about a gesture input to determine whether a single gesture is intended to enter a new word or to continue entry of a previous word determined from a previous gesture input. For example, the example computing device may determine that a new word is being entered when the computing device determines that a "high" pressure (e.g., a pressure that exceeds a particular pressure threshold) is associated with a beginning portion of a gesture as opposed to a "normal" or "low" pressure (e.g., pressure that does not exceed the particular pressure threshold), in which case the computing device may treat the gesture input as a continuation of a previous gesture.

Therefore, the techniques described herein may enable a computing device to utilize pressure to determine whether a continuous gesture input at a gesture keyboard corresponds to a single or multiple word inputs in addition to discerning whether a gesture input is for entering the start of a new word or whether the gesture input is for continuing where a previous gesture left off in entering a previous word. Techniques of this disclosure may provide one or more advantages. The physical and cognitive difficulty of entering long words using single, continuous gestures can cause errors in text entry, which are exacerbated by requiring additional inputs and time to correct the text entries. As such, techniques of this disclosure may improve the overall input speed and accuracy of the gesture keyboard by reducing the likelihood of erroneous text entry, particular for long words and may thus provide an improved user interface.

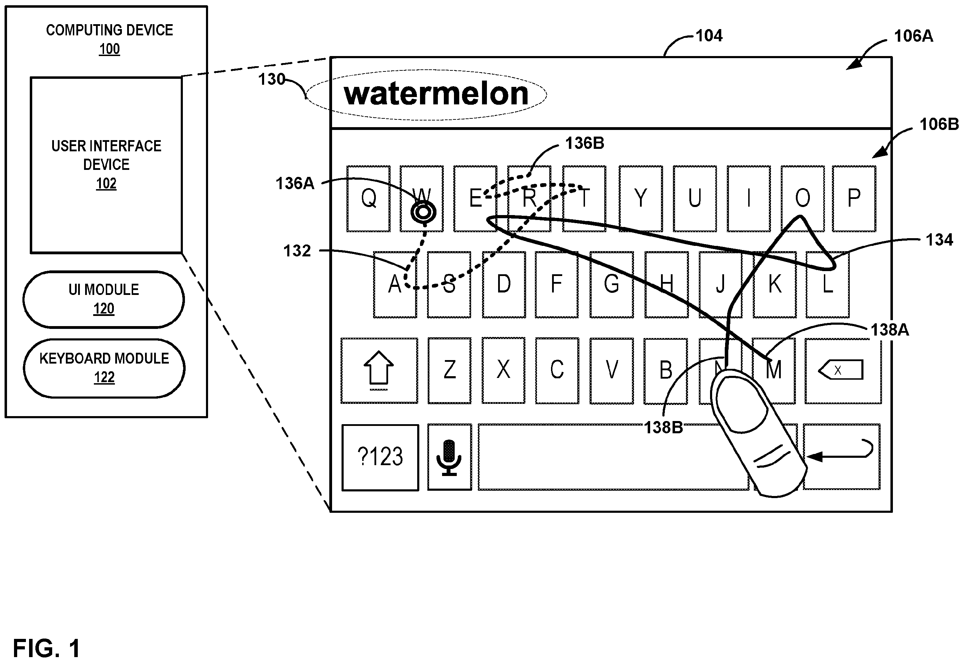

FIG. 1 is a conceptual diagram illustrating an example computing device configured to determine text using pressure information associated with a gesture input at a gesture keyboard, in accordance with one or more aspects of the present disclosure. In the example of FIG. 1, computing device 100 may be a mobile phone. However, in other examples, computing device 100 may be a tablet computer, a personal digital assistant (PDA), a laptop computer, a portable gaming device, a portable media player, an e-book reader, a computerized watch, television platform, or another type of computing device.

As shown in FIG. 1, computing device 100 includes a user interface device (UID) 102. UID 102 of computing device 100 may function as an input device for computing device 100 and as an output device. UID 102 may be implemented using various technologies. For instance, UID 102 may function as an input device using a presence-sensitive input device, such as a resistive touchscreen, a surface acoustic wave touchscreen, a capacitive touchscreen, a projective capacitance touchscreen, a pressure sensitive screen, an acoustic pulse recognition touchscreen, or another presence-sensitive input device technology. UID 102 may function as an output device using any one or more of a liquid crystal display (LCD), dot matrix display, light emitting diode (LED) display, organic lightemitting diode (OLED) display, e-ink, or similar monochrome or color display capable of outputting visible information to the user of computing device 100.

UID 102 of computing device 100 may include a presence-sensitive screen (e.g., presence-sensitive display) that may receive tactile user input from a user of computing device 100. UID 102 may receive indications of the tactile user input by detecting one or more tap and/or non-tap gestures from a user of computing device 100 (e.g., the user touching or pointing to one or more locations of UID 102 with a finger or a stylus pen). The presence-sensitive screen of UID 102 may present output to a user. UID 102 may present the output as a user interface (e.g., user interface 104) which may be related to functionality provided by computing device 100. For example, UID 102 may present various user interfaces of applications (e.g., an electronic message application, an Internet browser application, etc.) executing at computing device 100. A user of computing device 100 may interact with one or more of these applications to perform a function with computing device 100 through the respective user interface of each application.

Computing device 100 may include user interface ("UI") module 120, and a keyboard module 122. Modules 120 and 122 may perform operations described using software, hardware, firmware, or a mixture of both hardware, software, and firmware residing in and executing on computing device 100. Computing device 100 may execute modules 120 and 122 with multiple processors. Computing device 100 may execute modules 120 and 122 as a virtual machine executing on underlying hardware.

UI module 120 of computing device 100 may receive from UID 102, one or more indications of user input detected at UID 102. Generally, each time UID 102 receives an indication of user input detected at a location of UID 102, UI module 120 may receive information about the user input from UID 102.

For example, UID 102 may virtually overlay a grid of coordinates onto UID 102. The grid may not be visibly displayed by UID 102. The grid may assign a coordinate that includes a horizontal component (X) and a vertical component (Y) to each location. Each time UID 102 detects a gesture input, UI module 120 may receive information from UID 102. The information may include one or more coordinate locations and associated times indicating to UI module 120 both, where UID 102 detects the gesture input at UID 102, and when UID 102 detects the gesture input. The information may further include pressure information indicating an amount of pressure or force applied by the user on the UID 102. For example, UID 102 may determine the amount of pressure applied by a gesture input using capacitive, inductive, or other pressure sensing techniques. The pressure information may be in the form of numerical, quantified data points (e.g., "0.73 units of force") or discrete levels (e.g., "normal", "hard"). In some implementations, the pressure information may be represented as a depth component (Z) that are part of the grid coordinates (e.g., X, Y) described above.

UI module 120 may assemble the information received from UID 102 into a time-ordered sequence of touch events. For example, each touch event in the sequence may include data or components that represents parameters for characterizing a presence, an amount of pressure associated with, and/or movement (e.g., when, where, originating direction) of, input at UID 102. Each touch event in the sequence may include a location component (e.g., a x,y coordinate of a location at UID 102), a time component related to when UID 102 detected user input at the location, a pressure component indicating an amount of force detected by UID 102 when detecting the input at the location, and an action component related to whether the touch event corresponds to a lift up or a push down at the location.

In addition to time, location, and pressure, UI module 120 may determine one or more other characteristics of the user input and include information about these one or more characteristics within each touch event in the sequence of touch events. For example, UI module 120 may determine a start location of the user input, an end location of the user input, a density of a portion of the user input, a speed of a portion of the user input, a direction of a portion of the user input, and a curvature of a portion of the user input. One or more touch events in the sequence of touch events may include (in addition to a time, a location, and an action component as described above) a characteristic component that includes information about one or more characteristics of the user input (e.g., a density, a speed, etc.).

UI module 120 may cause UID 102 to present user interface 104. User interface 104 includes graphical elements displayed at various locations of UID 102. FIG. 1 illustrates edit region 106A and gesture keyboard 106B of user interface 104. Gesture keyboard 106B is a graphical keyboard having selectable, graphical elements displayed as keys for typing text at edit region 106A. Edit region 106A may include graphical elements such as images, objects, hyperlinks, characters of text (e.g., character strings) etc., that computing device 100 generates in response to input associated with gesture keyboard 106B. In some examples, edit region 106A is associated with a messaging application, a word processing application, an internet webpage browser application, or other text entry field of an application, operating system, or platform executing at computing device 100. In other words, edit region 106A represents a final destination of the letters that a user of computing device 100 is selecting using gesture keyboard 106B and is not an intermediary region associated with gesture keyboard 106B, such as word suggestion or autocorrect region that displays one or more complete word suggestions or auto-corrections.

FIG. 1 shows the letters *w-a-t-e-r-m-e-l-o-n* within edit region 106A. The letters w-*a-t-e-r-m-e-l-o-n* make up a string of characters or candidate word 130. Candidate word 130 is delineated by dashed circles in the example of FIG. 1, however UI device 102 may or may not output such dashed circles in some examples. Candidate word 130 may be a portion of a word and/or a word or portion of a word included in a dictionary.

FIG. 1 also shows a sequence of paths 132 and 134 presented as dashed and solid line segments, respectively, spanning locations of keys of gesture keyboard 106B. UI module 120 may cause UID 102 to present paths 132, 134 based on information received from UI module 120 about the locations of a gesture detected by UID 102. In other words, UI module 120 may cause UID 102 to display path 132, 134 at UID 102 such that, when paths 132, 134 are presented at UID 102, paths 132, 134 is visible to a user. In some examples, rather than display only one current path at a time, UI module 120 may cause UID 102 to display path 134 at the same time as a (previous) path 132. Paths 132, 134 may be rendered differently to represent which path is a previous gesture input, e.g., with dashed or light-colored lines.

A user of computing device 100 may cause UI module 120 to enter text in edit region 106A by providing input (e.g., tap and/or non-tap gestures) at locations of UID 102 that display the keys of gesture keyboard 106B. In response to user input such as this, computing device 100 may output one or more characters, strings, or multi-string phrases within edit region 106A, such as candidate word 130. In some examples, a word may generally be described as a string of one or more characters in a dictionary or lexicon (e.g., a set of strings with semantic meaning in a written or spoken language), a "word" may, in some examples, refer to any group of one or more characters. For example, a word may be an out-of-vocabulary word or a string of characters not contained within a dictionary or lexicon but otherwise used in a written vocabulary to convey information from one person to another. For instance, a word may include a name, a place, slang, or any other out-of-vocabulary word or uniquely formatted strings, etc., that includes a first portion of one or more characters followed by a second portion of one or more characters.

UI module 120 may act as an intermediary between various components of computing device 100 to make determinations based on input detected by UID 102 and generate output presented by UID 102. For instance, UI module 120 may receive, as an input from keyboard module 122 a representation of a keyboard layout of the keys included in gesture keyboard 106B. In some examples, UI module 120 may determine that the one or more location components in the sequence of touch events approximate input at gesture keyboard 106B (e.g., UI module 120 may determine the location of one or more of the touch events corresponds to an area of UID 102 that presents gesture keyboard 106B). UI module 120 may transmit, as output to keyboard module 122, the sequence of touch events along with locations where UID 102 presents each of the keys.

In response to transmitting touch events and locations of keys to keyboard module 122, UI module 120 may receive a candidate word (e.g., a string of text representing candidate word 130) that keyboard module 122 determined from the sequence of touch events. UI module 120 may update user interface 104 to include candidate word 130 received from keyboard module 122 within edit region 106A. UI module 120 may cause UID 102 to present the updated user interface 104 including candidate word 130 presented as graphical elements (e.g., characters) in edit region 106A.

Keyboard module 122 of computing device 100 may transmit, as output to UI module 120 (for inclusion as gesture keyboard 106B of user interface 104) a keyboard layout including a plurality of keys related to one or more written languages (e.g., English, Spanish, French, etc.). Keyboard module 122 may assign one or more characters or operations to each key of the plurality of keys in the keyboard layout. For instance, keyboard module 122 may generate a QWERTY keyboard layout including keys that represent characters used in typing the English language. The QWERTY keyboard layout may also include keys that represent operations used in typing the English language (e.g., backspace, delete, spacebar, enter, etc.).

Keyboard module 122 may receive data from UI module 120 that represents the sequence of touch events generated by UI module 120 as well as the locations of UID 102 where UID 102 presents each of the keys of gesture keyboard 106B. Keyboard module 122 may determine, based on the locations of the keys and the sequence of touch events, a selection of one or more keys. Keyboard module 122 may determine a character string based on the selection where each character in the character string corresponds to at least one key in the selection. Keyboard module 122 may send data indicating the character string to UI module 120 for inclusion as candidate word 130 in edit region 106A of user interface 104.

Keyboard module 122 may rely on various models and algorithms (e.g., a spatial model, a language model, etc.) to determine whether or not a sequence of touch events represents a selection of one or more keys. For example, keyboard module 122 may include spatial and language models to determine with a certain degree of certainty, which keys of gesture keyboard 106B are being selected and which character string is being entered with the selection.

Using such a spatial model, keyboard module 122 may compare the location components (e.g., coordinates) of one or more touch events in the sequence of touch events to respective locations of one or more keys of gesture keyboard 106B and generate a probability based on these comparisons that a selection of a key occurred. For example, keyboard module 122 may compare the location component of each touch event in the sequence of touch events to a key location of a particular key of gesture keyboard 106B. The location component of each touch event in the sequence may include one location of UID 102 and a key location (e.g., a centroid of a key) of a key in gesture keyboard 106B may include a different location of UID 102. Keyboard module 122 may determine a Euclidian distance between the two locations and generate a probability based on the Euclidian distance that the key was selected. Keyboard module 122 may correlate a higher probability to a key that shares a smaller Euclidian distance with one or more touch events than a key that shares a greater Euclidian distance with one or more touch events. Based on the spatial model probability associated with each key, keyboard module 122 may assemble the individual key selections with the highest spatial model probabilities into a time-ordered sequence of keys that keyboard module 122 may then determine represents a character string.

Using a pressure model, keyboard module 122 may modify the output from the spatial model using the pressure components of one or more touch events in the sequence of touch events. Keyboard module 122 may compare the pressure component of each touch event in the sequence of touch events to a pressure threshold. Based on the comparison, keyboard module 122 may annotate the time-ordered sequence of keys with metadata indicating whether the sequence of keys included a "hard" pressure (e.g., exceeding the pressure threshold). For example, keyboard module 122 may analyze the pressure component of the one or more touch events associated with the start location of the user input to determine whether the touch input began with a "hard" pressure (e.g., exceeding the pressure threshold). Similarly, keyboard module 122 may determine whether the input sequence of keys ended with a "hard" pressure (e.g., exceeding the pressure threshold) based on the pressure component in touch events associated with the end location of the user input. In some examples, rather than associate the pressure information with the gesture as a whole, keyboard module 122 may correlate the pressure information with specific keys in the sequence of keys. Keyboard module 122 may use both the pressure and location components of the touch events to associate pressure information with individual key presses, e.g., a hard 'W' press.

In one example, keyboard module 122 may use pressure data to determine which gesture inputs on gesture keyboard 106B should be included in a same candidate word 130 or in separate candidate words. In other words, rather than assume each distinct gesture is a new candidate word, keyboard module 122 may continue to build a candidate word with each subsequent gesture on top of previous gestures. In such cases, keyboard module 122 incorporates the selection of keys from a current gesture with the selection of keys from prior gestures. Upon detecting a gesture contains a "hard" press, keyboard module 122 may complete its building of the candidate word, and begin a new word. By enabling computing device 100 to combine non-continuous gestures to form a word, keyboard module 122 may provide a way for a user of computing device 100 to enter text more accurately and/or with less effort.

The techniques are now further described in detail with reference to FIG. 1. In the example of FIG. 1, computing device 100 may output, for display, a graphical keyboard comprising a plurality of keys. For example, keyboard module 122 may generate data that includes a representation of gesture keyboard 106B. UI module 120 may generate user interface 104 and include gesture keyboard 106B in user interface 104 based on the data representing gesture keyboard 106B. UI module 120 may send information to UID 102 that includes instructions for displaying user interface 104 at UID 102. UID 102 may receive the information and cause UID 102 to present user interface 104 including edit region 106A and gesture keyboard 106B. Gesture keyboard 106B may include a plurality of keys.

Computing device 100 may receive an indication of a gesture selecting a first sequence of keys from the plurality of keys. For example, a user of computing device 100 may provide a continuous gesture input that traverses across path 132 beginning at a first location 136A and ending at a second location 136B of UID 102 such that the gesture performed from the first location to the second location is detected by UID 102 throughout the performance of the gesture. In the example shown in FIG. 1, the gesture may traverse across a sequence of keys that includes the 'W' key, the 'A' key, the `S' key, the 'D' key, the 'R' key, the 'T' key, the 'R' key, the 'E' key, and the 'R' key. The gesture may begin with a greater amount of force (e.g., a hard force or force that exceeds a pressure threshold) (represented in FIG. 1 by concentric circles) applied at location 136A of UID 102 which is nearest to the location of the 'W' key and end with a lesser amount of force (e.g., a light force or force that does not exceed the pressure threshold) at location 136B proximate to the location of the 'R' key.

UI module 120 may generate a sequence of touch events based on the gesture. UI module 120 may cause UID 102 to present a graphical indication of path 132 based on information received from UI module 120 about the locations of the gesture detected by UID 102. Keyboard module 122 may rely on pressure information associated with the sequence of touch events generated by UI module 120 as well as a spatial model, language model, and/or other technique to determine which keys are most likely being selected. For example, keyboard module 122 may determine whether the received indication of the gesture satisfies a pressure threshold based on pressure information from touch events associated with the start location of the gesture. In the example shown in FIG. 1, keyboard module 122 may determine that pressure information for the touch events having locations proximate to the "W" key (e.g., location 136A) and during the start of the gesture exceeds a pressure threshold. Based on the pressure information, keyboard module 122 may initiate a new word instead of combining the gesture with previous input. In other words, keyboard module 122 may complete the word prediction of previous inputs, insert a word delimiter (e.g., space), and begins word prediction anew on the received gesture. In some examples, keyboard module 122 may analyze the pressure information after receiving some but not all of the sequence of touch events associated with a gesture input. In such a way, keyboard module 122 may incrementally determine whether the received indication of the gesture satisfies a pressure threshold without having to wait until the end of the gesture.

Subsequent to the first gesture, computing device 100 may further receive an indication of a second gesture selecting a second sequence of keys from the plurality of keys. Keyboard module 122 may characterize the second gesture, which was received subsequent to the first gesture, as separate and distinct from the first gesture based on action components in the sequence of touch events associated with the first and second gestures. For example, keyboard module 122 may receive a touch event indicating a lift off action by an input object (e.g., user's finger) and a subsequent touch event indicating a push down action by the input object. In the example shown in FIG. 1, a user of computing device 100 may provide a gesture input that traverses across path 134, which traverses across a sequence of keys that includes the 'M' key, the 'E' key, the 'L' key, the 'O' key, and the 'N' key (i.e., M-N-J-H-G-F-E-R-T-Y-J-K-L-O-K-J-N). The second gesture may begin at location 138A of UID 102 (which, notably, does not include concentric circles in FIG. 1 to indicate that the gesture does not include the application of a hard force) which is nearest to the location of the 'M' key and ends at location 138B of UID 102 which is nearest to the location of the 'N' key.

Similar to the operations associated with the first gesture, keyboard module 122 may determine whether the indication of the second gesture satisfies a pressure threshold based on pressure information from touch events associated with the start location of the second gesture. For example, keyboard module 122 may determine that pressure information for the touch events having locations proximate to the "M" key (e.g., location 138A) and during the start of the second gesture does not exceed the pressure threshold.

Responsive to determining that the indication of the second gesture does not satisfy a certain pressure threshold, keyboard module 122 may perform word prediction to determine a candidate word 130 that includes a combination of the first sequence of keys as well as the second sequence of keys. For example, rather than outputting a candidate word "water" upon receipt of the second gesture, keyboard module 122 may combine the second sequence of keys which includes, among other keys, the 'M' key, the 'E' key, the 'L' key, the 'O' key, and the 'N' key, with the first sequence of keys which includes the 'W' key, the 'A' key, the 'D' key, the `R' key, the 'T' key, the `R' key, the 'E' key, and the `R' key in the determination of the candidate word "watermelon."

Keyboard module 122 may perform word prediction to determine a candidate word 130 using the combination of the first gesture and the second gesture even though the gestures are separate and non-continuous. Keyboard module 122 outputs candidate word 130 that includes the combination of the first sequence of keys and the second sequence of keys. For example, keyboard module 122 causes UID 102 to display the candidate word "watermelon" in edit region 106A

For sake of explanation, assume that the second gesture did include a "hard" pressure (e.g., exceeding a pressure threshold) applied during the beginning of the gesture and proximate to the "M" key at location 138A. Responsive to determining that the indication of the second gesture did in fact satisfy the pressure threshold, keyboard module 122 may complete the word prediction based on the first gesture that includes the first sequence of keys (and not based on the second gesture having the second sequence of keys). In other words, keyboard module 122 refrains from outputting a candidate word that combines the first gesture and the second gesture, and instead outputs a candidate word "water" that include the selection of keys from the first gesture only. Keyboard module 122 may also initiate prediction of a new word based on the second gesture to determine the candidate word "melon."

Techniques of the present disclosure may improve the accuracy with which a user can enter text into a computing device. Using techniques of this disclosure, a user may, instead of having to perform a single, continuous gesture for a word, perform multiple gestures that indicate the word. Such techniques are particularly helpful to users for entering long words containing many characters, such as compound words. By enabling the computing device to determine input words based on multiple gesture inputs and corresponding pressure information, the described technique allows the user to rest the input finger in the middle of gesturing a long word, which reduces user fatigue and the likelihood of errors. The present techniques further reduce the likelihood of input errors by decreasing the cognitive difficulty of entering long words by breaking the long word in chunks. As such, techniques of this disclosure may improve the overall input speed and accuracy of the gesture keyboard by reducing the likelihood of erroneous text entry.

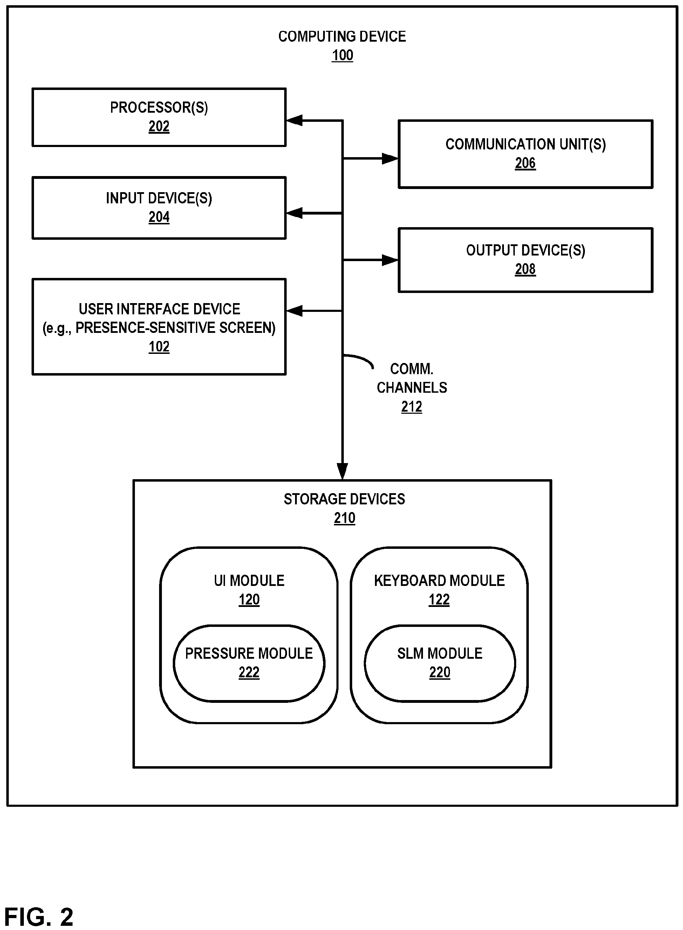

FIG. 2 is a block diagram illustrating an example computing device configured to determine text using pressure information associated with a gesture input at a gesture keyboard, in accordance with one or more aspects of the present disclosure. Computing device 100 of FIG. 2 is described below within the context of FIG. 1. FIG. 2 illustrates only one particular example of computing device 100, and many other examples of computing device 100 may be used in other instances and may include a subset of the components included in example computing device 100 or may include additional components not shown in FIG. 2.

As shown in the example of FIG. 2, computing device 100 includes user interface device 102 ("UID 102"), one or more processors 202, one or more input devices 204, one or more communication units 206, one or more output devices 208, and one or more storage devices 210. Storage devices 210 of computing device 100 also include UI module 120 and keyboard module 122. UI module 120 includes a pressure module 222. Keyboard module 122 includes a spatial-language model module 220 ("SLM module 220"). Communication channels 212 may interconnect each of the components 102, 120, 122, 202, 204, 206, 208, 210, 220, and 222 for inter-component communications (physically, communicatively, and/or operatively). In some examples, communication channels 212 may include a system bus, a network connection, an inter-process communication data structure, or any other method for communicating data.

One or more input devices 204 of computing device 100 may receive input. Examples of input are tactile, audio, and video input. Input devices 204 of computing device 100, in one example, includes a presence-sensitive input device (e.g., a touch sensitive screen, a presence-sensitive display), mouse, keyboard, voice responsive system, video camera, microphone or any other type of device for detecting input from a human or machine.

One or more output devices 208 of computing device 100 may generate output. Examples of output are tactile, audio, and video output. Output devices 208 of computing device 100, in one example, includes a presence-sensitive display, sound card, video graphics adapter card, speaker, cathode ray tube (CRT) monitor, liquid crystal display (LCD), or any other type of device for generating output to a human or machine.

One or more communication units 206 of computing device 100 may communicate with external devices via one or more networks by transmitting and/or receiving network signals on the one or more networks. For example, computing device 100 may use communication unit 206 to transmit and/or receive radio signals on a radio network such as a cellular radio network. Likewise, communication units 206 may transmit and/or receive satellite signals on a satellite network such as a GPS network. Examples of communication unit 206 include a network interface card (e.g. such as an Ethernet card), an optical transceiver, a radio frequency transceiver, a GPS receiver, or any other type of device that can send and/or receive information. Other examples of communication units 206 may include Bluetooth^{®}, GPS, 3G, 4G, LTE, and Wi-Fi^{®} radios found in mobile devices as well as Universal Serial Bus (USB) controllers.

In some examples, UID 102 of computing device 100 may include functionality of input devices 204 and/or output devices 208. In the example of FIG. 2, UID 102 may be or may include a presence-sensitive input device. In some examples, a presence-sensitive input device may detect an object at and/or near the presence-sensitive input device. As one example range, a presence-sensitive input device may detect an object, such as a finger or stylus that is within two inches or less of the presence-sensitive input device. The presence-sensitive input device may determine a location (e.g., an [x,y] coordinate) of the presence-sensitive input device at which the object was detected. In another example range, a presence-sensitive input device may detect an object six inches or less from the presence-sensitive input device and other ranges are also possible. The presence-sensitive input device may determine the location of the input device selected by a user's finger using capacitive, inductive, and/or optical recognition techniques. In some examples, presence-sensitive input device provides output to a user using tactile, audio, or video stimuli as described with respect to output device 208. In the example of FIG. 2, UID 102 presents a user interface (such as user interface 104 of FIG. 1) at UID 102.

While illustrated as an internal component of computing device 100, UID 102 also represents an external component that shares a data path with computing device 100 for transmitting and/or receiving input and output. For instance, in one example, UID 102 represents a built-in component of computing device 100 located within and physically connected to the external packaging of computing device 100 (e.g., a screen on a mobile phone). In another example, UID 102 represents an external component of computing device 100 located outside and physically separated from the packaging of computing device 100 (e.g., a monitor, a projector, etc. that shares a wired and/or wireless data path with a tablet computer).

One or more storage devices 210 within computing device 100 may store information for processing during operation of computing device 100. In some examples, storage device 210 is a temporary memory, meaning that a primary purpose of storage device 210 is not long-term storage. Storage devices 210 on computing device 100 may be configured for short-term storage of information as volatile memory and therefore not retain stored contents if powered off. Examples of volatile memories include random access memories (RAM), dynamic random access memories (DRAM), static random access memories (SRAM), and other forms of volatile memories known in the art.

Storage devices 210, in some examples, also include one or more computer-readable storage media. Storage devices 210 may be configured to store larger amounts of information than volatile memory. Storage devices 210 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage devices 210 may store program instructions and/or data associated with UI module 120, keyboard module 122, pressure module 222, and SLM module 220.

One or more processors 202 may implement functionality and/or execute instructions within computing device 100. For example, processors 202 on computing device 100 may receive and execute instructions stored by storage devices 210 that execute the functionality of UI module 120, keyboard module 122, pressure module 222, and SLM module 220. These instructions executed by processors 202 may cause computing device 100 to store information, within storage devices 210 during program execution. Processors 202 may execute instructions of modules 120, 122, 220, and 222 to cause UID 102 to display user interface 104 at UID 102. That is, modules 120, 122, 220, and 222 may be operable by processors 202 to perform various actions, including receiving an indication of a gesture at locations of UID 102 and causing UID 102 to present user interface 104 at UID 102.

In accordance with aspects of this disclosure computing device 100 of FIG. 2 may output for display at UID 102 a graphical keyboard comprising a plurality of keys. For example, during operational use of computing device 100, keyboard module 122 may cause UI module 120 of computing device 100 to output a keyboard layout (e.g., an English language QWERTY keyboard, etc.) for display at UID 102. UI module 120 may receive data specifying the keyboard layout from keyboard module 122 over communication channels 212. UI module 120 may use the data to generate user interface 104 including edit region 106A and the plurality of keys of the keyboard layout from keyboard module 122 as gesture keyboard 106B. UI module 120 may transmit data over communication channels 212 to cause UID 102 to present user interface 104 at UID 102. UID 102 may receive the data from UI module 120 and cause UID 102 to present user interface 104.

Computing device 100 may receive an indication of a first gesture that traverses a first group of keys of the plurality of keys and an indication of a pressure (e.g., force) associated with the first gesture. For example, computing device 100 receives a first gesture input (e.g., from a user) that traverses across path 132 associated with the first group of keys and that includes an applied pressure applied to UID 102 during an initial portion of the gesture. In this example, the initial portion of the gesture input corresponds to location 136A of UID 102 which is nearest to the location of the 'W' key. The gesture input further includes a traversal of a path associated with a group of keys (e.g., the 'A' key, 'S' key, 'D' key, 'R' key, 'T' key, `R' key, 'E' key, and 'R' key again), ending at location 136B of UID 102 which is nearest to the location of the 'R' key. The last touch event in the sequence of touch events associated with the first gesture input may include an indication that the first gesture input has ended. For example, the touch event corresponding to the gesture input ending at location 136B proximate to the "R" key indicates that the continuous gesture input has ended.

Computing device 100 may receive an indication of a second gesture that traverses a second group of keys of the plurality of keys, and which does not include an indication of a pressure. For example, computing device 100 receives a second gesture input (subsequent to the first gesture input) that traverses across path 134 and that does not include a pressure during an initial portion of the gesture. In this example, the initial portion of the gesture input begins at location 138A of UID 102 which is nearest to the location of the 'M' key, and continues to a traversal of a second group of keys (e.g., M-N-J-H-G-F-E-R-T-Y-J-K-L-O-K-J-N), ending at location 138B of UID 102 which is nearest to the location of the 'N' key.

UI module 120 may generate sequences of touch events based on the first and second gestures. Pressure module 222 of UI module 120 may incorporate pressure information into the sequences of touch events based on the gestures. Pressure module 222 may modify the touch event, in the sequence of touch events, that corresponds to the initial portion of the first gesture. For example, pressure module 222 modifies the touch event associated with the traversal of the "W" key (i.e., during the initial portion of the gesture) to include pressure information.

Using the pressure information, keyboard module 122 may determine a candidate word from a selection of keys determined from touch events of multiple gesture inputs, instead of only a single gesture input. Keyboard module 122 may use multiple sequences of touch events associated with multiple gesture inputs in determining a candidate word from the selection of keys. For example, keyboard module 122 may combine the selection of keys from the first gesture input and the second gesture input based on a pressure indication (or absence thereof) in the second sequence of touch events. In some cases, in response to keyboard module 122 determining that the second sequence of touch events indicates a pressure has been applied to UID 102 during an initial portion of the second gesture input, keyboard module 122 uses the first sequence of touch events (and its associated selection of keys) separately from the second sequence of touch events (and its associated selection of keys) to determine a candidate word. Keyboard module 122 may continue to combine selections of keys from sequences of touch events from multiple gesture inputs until keyboard module 122 encounters a sequence of touch events from a new gesture input that indicates a pressure associated with the initial portion of the new gesture input. Put another way, keyboard module 122 assumes that each incoming selection of keys should be joined with the previous selection of keys until keyboard module 122 detects pressure information in the next gesture input.

Alternatively, keyboard module 122 may be configured to join each new selection of keys with the previous selection of keys in response to the presence of pressure information in the new gesture input. For example, keyboard module 122 may determine a candidate word based on a selection of keys from a single continuous gesture input, and also determine a candidate word based on a selection of keys from multiple gesture inputs, each having a pressure indication associated with an initial portion of each subsequent gesture input.

SLM module 220 of keyboard module 122 may determine the one or more candidate words from one or more lexicon data stores that have a highest probability of being the candidate words that a user may wish to enter by providing input at gesture keyboard 106B. The probability may indicate a frequency of use of each candidate word in a language context. That is, SLM module 220 may determine that one or more candidate words that have a greatest likelihood of being the word that a user may wish to enter at edit region 106A are the one or more candidate words that appear most often during an instance of written and/or spoken communication using a particular language. Keyboard module 122 may utilize a language module of SLM module 220 to refine the selection of keys and/or to determine at least one candidate word from the selection of keys determined from the locations in multiple gestures. For example, SLM module 220 of keyboard module 122 may perform a look up within one or more lexicon data stores to identify one or more candidate words stored at the one or more lexicon data stores that begin with the letter "w " associated with the first key in the first sequence, end with the letter *"n"* associated with the last key in the second sequence, and that may or may not include any of the letters *W-AS-D-R-T-R-E-R-M-N-J-H-G-F-E-R-T-Y-J-K-L-O-K-J-N* that correspond to each of the keys in the sequence in-between the first and last keys. SLM module 220 may identify the candidate words *watermelon, watermelons,* and *watermen* as some example candidate words in the one or more lexicon data stores that begin and end with the letters w-n.

Keyboard module 122 may rely on a language model and/or access a lexicon of computing device 100 to autocorrect (e.g., spellcheck) a character string generated from a sequence of key selections before and/or after outputting the character string to UI module 120 for inclusion within edit region 106A of user interface 104. A lexicon of computing device 100 may include a list of words within a written language vocabulary. Using a language model, keyboard module 122 may perform a lookup in the lexicon of a character string generated from a selection of keys to identify one or more candidate words that include at least some or all of the characters of the character string generated based on the selection of keys.

In some examples, keyboard module 122 may assign a Jaccard similarity coefficient to the one or more candidate words to determine a degree of similarity between a character string inputted by a user and a word in the lexicon. In general, a Jaccard similarity coefficient, also known as a Jaccard index, represents a measurement of similarity between two sample sets (e.g., a character string and a word in a dictionary). Based on the comparison, keyboard module 122 may generate a Jaccard similarity coefficient for one or more words in the lexicon. Each candidate word may include, as a prefix, an alternative arrangement of some or all of the characters in the character string. In other words, each candidate word may include as the first letters of the word, the letters of the character string determined from the selection of keys. For example, based on a selection of w-a-t-e, keyboard module 122 may determine that a candidate word of the lexicon with a greatest Jaccard similarity coefficient to w-a-t-e is water. Keyboard module 122 may output the autocorrected character string water to UI module 120 for inclusion in edit region 106A rather than the actual character string w-a-t-e indicated by the selection of keys.

Keyboard module 122 may cause UI module 120 to present candidate word 130, determined from the combined selection of keys, at edit region 106A. For example, keyboard module 122 may send information via communication channel 212 that causes UI module 120 to cause UID 102 to present candidate word 130 as a string of text at edit region 106A. In some examples, keyboard module 122 may cause UI module 120 to graphically annotate candidate word 130 to indicate which portions of candidate word are determined from separate gesture inputs. For example, to present the candidate word "watermelon" determined from multiple gesture inputs as described above, UI module 120 may highlight the portion "water" with a first color, and highlight the portion "melon" with a second color different from the first color.

In one embodiment, keyboard module 122 may iteratively update the candidate word based on each subsequent gesture input and cause UI module 120 to update the candidate word displayed in edit region 106A. For example, in a first iteration, keyboard module 122 may determine a character string "water" based on the first gesture input corresponding to path 132 and cause UI module 120 to display the character string "water" in edit region 106A. Then, in a second, subsequent iteration, keyboard module 122 may determine an updated candidate word "watermelon" based on the second gesture input non-continuous with the first gesture input, corresponding to path 134, and based in conjunction with the first (previous) gesture input. Keyboard module 122 may cause UI module 120 to update the edit region 106A to display the updated candidate word.

In this way, unlike a typical gesture keyboard that adopts a one-gesture for one-word model, computing device 100 may allow for using multiple gesture inputs (that are non-continuous to each other) to input a word. As a result, computing device 100 may reduce input errors caused by long words or compound words and improve the accuracy with which a user can type a word using gesture keyboard 106B. As such, computing device 100 may receive fewer re-entry inputs from a user to enter text using gesture keyboard, and by receiving fewer re-entry inputs, computing device 100 may perform fewer operations and as such consume less electrical power than other computing devices.

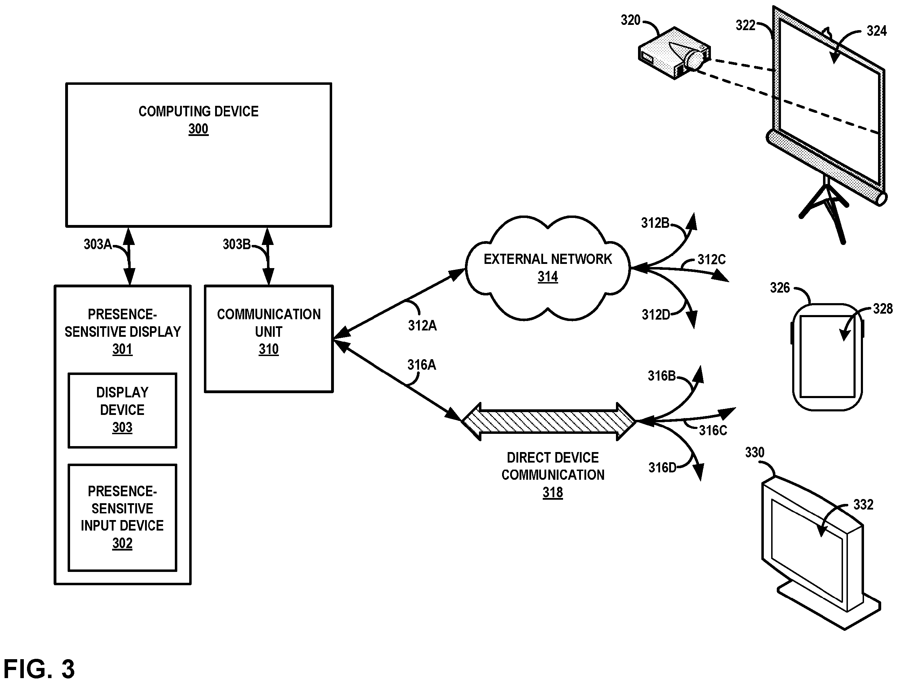

FIG. 3 is a block diagram illustrating another example computing device configured to determine text using pressure information associated with a gesture input at a gesture keyboard, in accordance with one or more techniques of the present disclosure. The example computing device outputs graphical content for display at a remote device. Graphical content, generally, may include any visual information that may be output for display, such as text, images, a group of moving images, etc. The example shown in FIG. 3 includes a computing device 300, presence-sensitive display 301, communication unit 310, projector 320, projector screen 322, tablet device 326, and visual display device 330. Although shown for purposes of example in FIGS. 1 and 2 as a stand-alone computing device 100, a computing device, such as computing device 100 and/or computing device 300, may generally refer to any component or system that includes a processor or other suitable computing environment for executing software instructions and, for example, need not include a presence-sensitive display.

As shown in the example of FIG. 3, computing device 300 may be a processor that includes functionality as described with respect to processors 202 in FIG. 2. In such examples, computing device 300 may be operatively coupled to presence-sensitive display 301 by a communication channel 303A, which may be a system bus or other suitable connection. Computing device 300 may also be operatively coupled to communication unit 310, further described below, by a communication channel 303B, which may also be a system bus or other suitable connection. Although shown separately as an example in FIG. 3, computing device 300 may be operatively coupled to presence-sensitive display 301 and communication unit 310 by any number of one or more communication channels.

In other examples, such as illustrated previously by computing devices 100 in FIGS. 1-2, computing device 300 may be a portable or mobile device such as mobile phones (including smart phones), laptop computers, etc. In some examples, computing device 100 may be desktop computers, tablet computers, smart television platforms, cameras, personal digital assistants (PDAs), servers, mainframes, etc.

Presence-sensitive display 301, like UID 102 as shown in FIG. 1, may include display device 303 and presence-sensitive input device 305. Display device 303 may, for example, receive data from computing device 300 and display the graphical content. In some examples, presence-sensitive input device 302 may determine one or more user inputs (e.g., continuous gestures, multi-touch gestures, single-touch gestures, etc.) at presence-sensitive display 301 using capacitive, inductive, and/or optical recognition techniques and send indications of such user input to computing device 300 using communication channel 303A. In some examples, presence-sensitive input device 302 may be physically positioned on top of display device 303 such that, when a user positions an input unit over a graphical element displayed by display device 303, the location at which presence-sensitive input device 305 corresponds to the location of display device 303 at which the graphical element is displayed.

As shown in FIG. 3, computing device 300 may also include and/or be operatively coupled with communication unit 310. Communication unit 310 may include functionality of communication unit 206 as described in FIG. 2. Examples of communication unit 310 may include a network interface card, an Ethernet card, an optical transceiver, a radio frequency transceiver, or any other type of device that can send and receive information. Other examples of such communication units may include Bluetooth, 3G, 4G, LTE, and Wi-Fi radios, Universal Serial Bus (USB) interfaces, etc. Computing device 300 may also include and/or be operatively coupled with one or more other devices, e.g., input devices, output devices, memory, storage devices, etc. that are not shown in FIG. 3 for purposes of brevity and illustration.

FIG. 3 also illustrates a projector 320 and projector screen 322. Other such examples of projection devices may include electronic whiteboards, holographic display devices, and any other suitable devices for displaying graphical content. Projector 320 and projector screen 322 may include one or more communication units that enable the respective devices to communicate with computing device 300. In some examples, the one or more communication units may enable communication between projector 320 and projector screen 322. Projector 320 may receive data from computing device 300 that includes graphical content. Projector 320, in response to receiving the data, may project the graphical content onto projector screen 322. In some examples, projector 320 may determine one or more user inputs (e.g., continuous gestures, multi-touch gestures, single-touch gestures, etc.) at projector screen using optical recognition or other suitable techniques and send indications of such user input using one or more communication units to computing device 300.

Projector screen 322, in some examples, may include a presence-sensitive display 324. Presence-sensitive display 324 may include a subset of functionality or all of the functionality of UI device 102 as described in this disclosure. In some examples, presence-sensitive display 324 may include additional functionality. Projector screen 322 (e.g., an electronic whiteboard), may receive data from computing device 300 and display the graphical content. In some examples, presence-sensitive display 324 may determine one or more user inputs (e.g., continuous gestures, multi-touch gestures, single-touch gestures, etc.) at projector screen 322 using capacitive, inductive, and/or optical recognition techniques and send indications of such user input using one or more communication units to computing device 300.

FIG. 3 also illustrates tablet device 326 and visual display device 330. Tablet device 326 and visual display device 330 may each include computing and connectivity capabilities. Examples of tablet device 326 may include e-reader devices, convertible notebook devices, hybrid slate devices, etc. Examples of visual display device 330 may include televisions, computer monitors, etc. As shown in FIG. 3, tablet device 326 may include a presence-sensitive display 328. Visual display device 330 may include a presence-sensitive display 332. Presence-sensitive displays 328, 332 may include a subset of functionality or all of the functionality of UI device 102 as described in this disclosure. In some examples, presence-sensitive displays 328, 332 may include additional functionality. In any case, presence-sensitive display 332, for example, may receive data from computing device 300 and display the graphical content. In some examples, presence-sensitive display 332 may determine one or more user inputs (e.g., continuous gestures, multi-touch gestures, single-touch gestures, etc.) at projector screen using capacitive, inductive, and/or optical recognition techniques and send indications of such user input using one or more communication units to computing device 300.

Presence-sensitive displays 328, 332 may include pressure-sensitive functionality that enables presence-sensitive display to determine pressure or force information corresponding to a user input object (e.g., finger) contacting presence-sensitive display 328, 332. For example, presence-sensitive display 332 may be configured to detect an amount of force applied to presence-sensitive display 332 by a user input object, using capacitive, inductive, or other pressure sensing techniques.

As described above, in some examples, computing device 300 may output graphical content for display at presence-sensitive display 301 that is coupled to computing device 300 by a system bus or other suitable communication channel. Computing device 300 may also output graphical content for display at one or more remote devices, such as projector 320, projector screen 322, tablet device 326, and visual display device 330. For instance, computing device 300 may execute one or more instructions to generate and/or modify graphical content in accordance with techniques of the present disclosure. Computing device 300 may output the data that includes the graphical content to a communication unit of computing device 300, such as communication unit 310. Communication unit 310 may send the data to one or more of the remote devices, such as projector 320, projector screen 322, tablet device 326, and/or visual display device 330. In this way, computing device 300 may output the graphical content for display at one or more of the remote devices. In some examples, one or more of the remote devices may output the graphical content at a presence-sensitive display that is included in and/or operatively coupled to the respective remote devices.

In some examples, computing device 300 may not output graphical content at presence-sensitive display 301 that is operatively coupled to computing device 300. In other examples, computing device 300 may output graphical content for display at both a presence-sensitive display 301 that is coupled to computing device 300 by communication channel 303A, and at one or more remote devices. In such examples, the graphical content may be displayed substantially contemporaneously at each respective device. For instance, some delay may be introduced by the communication latency to send the data that includes the graphical content to the remote device. In some examples, graphical content generated by computing device 300 and output for display at presence-sensitive display 301 may be different than graphical content display output for display at one or more remote devices.

Computing device 300 may send and receive data using any suitable communication techniques. For example, computing device 300 may be operatively coupled to external network 304 using network link 312A. Each of the remote devices illustrated in FIG. 3 may be operatively coupled to network external network 304 by one of respective network links 312B, 312C, and 312D. External network 304 may include network hubs, network switches, network routers, etc., that are operatively inter-coupled thereby providing for the exchange of information between computing device 300 and the remote devices illustrated in FIG. 3. In some examples, network links 312A-312D may be Ethernet, ATM or other network connections. Such connections may be wireless and/or wired connections.

In some examples, computing device 300 may be operatively coupled to one or more of the remote devices included in FIG. 3 using direct device communication 318. Direct device communication 318 may include communications through which computing device 300 sends and receives data directly with a remote device, using wired or wireless communication. That is, in some examples of direct device communication 318, data sent by computing device 300 may not be forwarded by one or more additional devices before being received at the remote device, and vice-versa. Examples of direct device communication 318 may include Bluetooth, Near-Field Communication, Universal Serial Bus, Wi-Fi, infrared, etc. One or more of the remote devices illustrated in FIG. 3 may be operatively coupled with computing device 300 by communication links 316A-316D. In some examples, communication links 312A-312D may be connections using Bluetooth, Near-Field Communication, Universal Serial Bus, infrared, etc. Such connections may be wireless and/or wired connections.

In accordance with techniques of the disclosure, computing device 300 may be operatively coupled to visual display device 330 using external network 304. Computing device 300 may output a gesture keyboard for display at presence-sensitive display 332. For instance, computing device 300 may send data that includes a representation of gesture keyboard 306B to communication unit 310. Communication unit 310 may send the data that includes the representation of gesture keyboard 306B to visual display device 330 using external network 304. Visual display device 330, in response to receiving the data using external network 304, may cause presence-sensitive display 332 to output gesture keyboard 306B comprising a plurality of keys.

In response to a user performing first gesture at presence-sensitive display 332 to select a first group of keys of the keyboard, e.g., a "forceful" (e.g., using pressure that exceeds a particular pressure threshold) <W-Key> followed by the <A-key>, the <S-key>, the <D-key>, the <R-key>, the <T-key>, the <R-key>, the <E-key>, and the <R-key>, visual display device 330 may send an indication of the gesture to computing device 300 using external network 304. Communication unit 310 may receive the indication of the gesture, and send the indication to computing device 300. Similarly, in response to a user performing a second gesture at presence-sensitive display 332 to select a second group of keys of the keyboard, e.g., a "normal" (e.g., using pressure that does not exceed a particular pressure threshold) <M-key>, followed by a <N-key>, <J-key>, <H-key>, etc., ending in the <N-key>, visual display device 330 may send a second indication of the gesture to computing device 300 using external network 304.

After receiving the indication of the gestures, computing device 300 may determine a selection of the keys of graphical keyboard 106B. For example, computing device 100 may determine a combined selection of keys based on the indications of the first and second gestures received via communication unit 110. Computing device 300 may determine a candidate word based on the combined selection of keys from multiple gesture inputs that are non-continuous with each other (i.e., distinct from each other).

Computing device 300 may output data indicative of pressure information along a path traversed by the first gesture to visual display device 330 using communication unit 310 and external network 314 to cause visual display device to output a graphical indication of the pressure information for display at presence-sensitive display 332. For example, display device 330 may cause presence-sensitive display 332 to present a line segment having a bold line weight as a graphical indication of a "forceful" gesture (e.g., having pressure that exceeds a particular pressure threshold), and a standard line weight as a graphical indication of a "normal" gesture (e.g., having pressure that does not exceed a particular pressure threshold). In another example, display device 330 may cause presence-sensitive display 332 to present a line segment of varying line weight (or color, or other varying graphical qualities, etc.) such that only certain portions of the line segment having a bold line weight to indicate a "forceful" input (e.g., having pressure that exceeds a particular pressure threshold) and other portions of the line segment having a standard line weight to indicate a "normal" gesture (e.g., having pressure that does not exceeds a particular pressure threshold). In other examples, display device 330 may cause presence-sensitive display 332 to present one or more circles at an initial portion of a gesture as a graphical indication of gesture having a "forceful" (e.g., having pressure that exceeds a particular pressure threshold) initial contact with the presence-sensitive device.

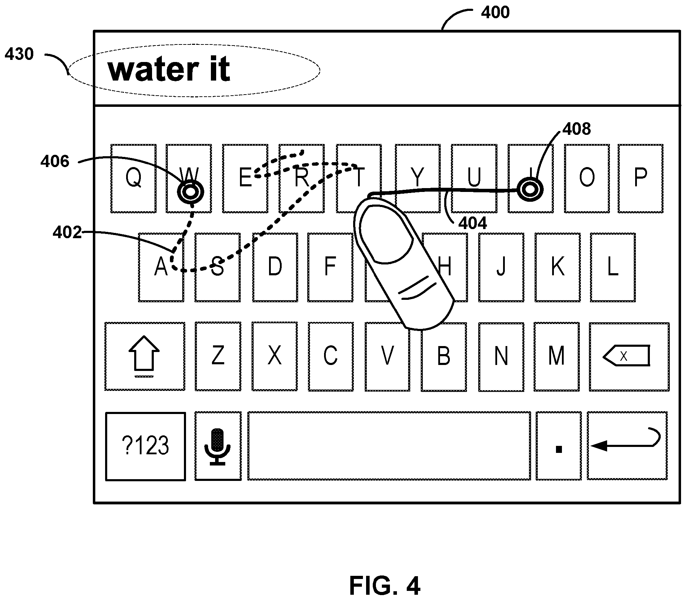

FIG. 4 is a conceptual diagram illustrating example graphical user interface for inputting words using pressure information associated with a gesture input at a gesture keyboard, in accordance with one or more aspects of the present disclosure. FIG. 4 is described below in the context of computing device 100 (described above) from FIG. 1 and FIG. 2.

FIG. 4 illustrates that computing device 100 may output graphical user interface 400 for display (e.g., at UID 102). Graphical user interface 400 includes a gesture keyboard which has a plurality of keys. Computing device 100 receives an indication of a gesture selecting a first sequence of keys from the plurality of keys. For example, a user of computing device 100 may provide a gesture input that traverses across a path 402 (similar to gesture input on path 132 shown in FIG. 1) which includes a "forceful" input (e.g., having pressure that exceeds a certain pressure threshold) at a first location 406.

Subsequent to the first gesture, computing device 100 further receives an indication of a second gesture selecting a second sequence of keys from the plurality of keys. For example, the user of computing device 100 may provide a gesture input that begins at a location 408 and traverse across path 404 to select a second sequence of keys that includes the "I" key, the "U" key, the "Y" key, and the "T" key (i.e., I-U-Y-T). However, in contrast to the example shown in FIG. 1, the gesture input associated with path 404 includes a "forceful" input (e.g., having pressure that exceeds a certain pressure threshold) during an initial portion of the gesture input, i.e., proximate to location 408.

As previously described, UI module 120 may generate a sequence of touch events based on the gesture. UI module 120 may cause UID 102 to present a graphical indication of path 404 based on information received from UI module 120 about the locations of the gesture detected by UID 102. Keyboard module 122 may rely on pressure information associated with the sequence of touch events generated by UI module 120 as well as a spatial model, language model, and/or other technique to determine which keys are most likely being selected. For example, keyboard module 122 may determine that pressure information for the touch events having locations proximate to the "I" key (e.g., location 408) and during the start of the gesture exceeds a pressure threshold. Based on the pressure information, keyboard module 122 may initiate a new word instead of combining the gesture with previous input (such as in the example shown in FIG. 1). In other words, keyboard module 122 may complete the word prediction of the previous input to yield the candidate word "water", insert a word delimiter (e.g., space), and perform word prediction on the second gesture. FIG. 4 shows the letters "w-a-t-e-r" and "i-t" within the edit region of user interface 400. The letters "w-a-t-e-r" and "i-t" make up a string of characters or candidate word 430.

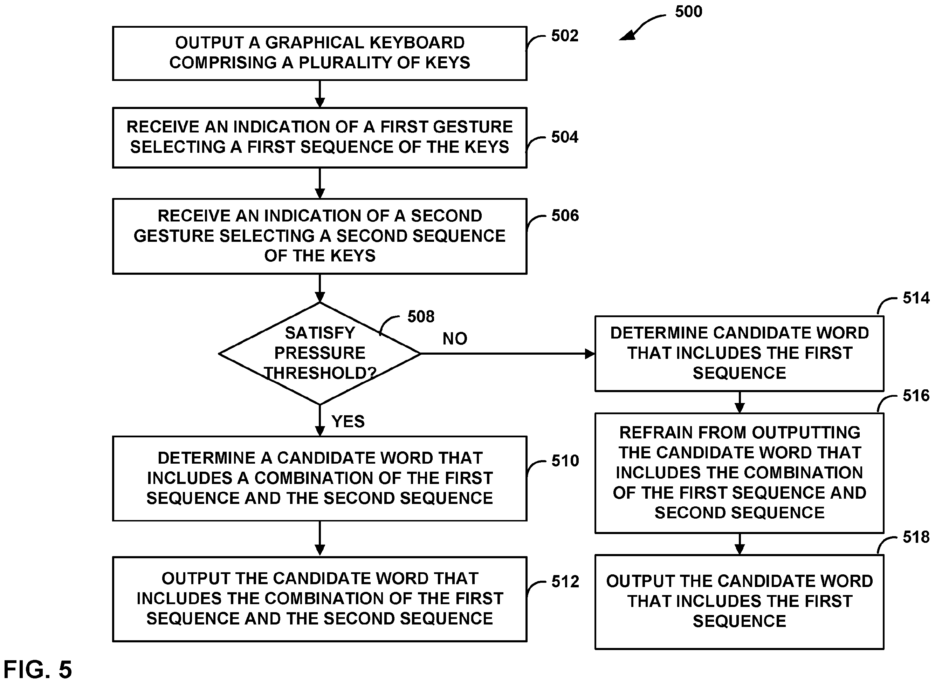

FIG. 5 is a flowchart illustrating an example operation 500 of the computing device configured to determine text using pressure information associated with a gesture input at a gesture keyboard, in accordance with one or more aspects of the present disclosure. The process of FIG. 5 may be performed by one or more processors of a computing device, such as computing device 100 illustrated in FIG. 1 and FIG. 2. For purposes of illustration only, FIG. 5 is described below within the context of computing device 100 of FIG. 1 and FIG. 2.

FIG. 5 illustrates that computing device 100 outputs a gesture keyboard comprising a plurality of keys (502). For example, UI module 120 of computing device 100 may cause UID 102 to present graphical user interface 104 including a gesture keyboard having a plurality of keys.

Computing device 100 receives an indication of a first gesture selecting a first sequence of one or more keys from the plurality of keys (504). For example, a user of computing device 100 may draw two strokes for the character strings "grand" and "mother" on the graphical keyboard. While the user provides a first gesture at UID 102 to input the word "grand", UI module 120 and keyboard module 122 may receive data from UID 102 about the input as an indication of a first gesture selecting a first sequence of keys including the <G-key>, the <R-key>, the <A-key>, the <N-key>, and the <D-key>, among others.

Computing device 100 receives an indication of a second gesture selecting a second sequence of one or more keys from the plurality of keys (506). For example, while the user provides a second gesture at UID 102 to input the word "mother", UI module 120 and keyboard module 122 may receive data from UID 102 about the input as an indication of a second gesture selecting a second sequence of keys including the <M-key>, the <O-key>, the <T-key>, the <H-key>, the <E-key>, and the <R-key> among others.

Computing device 100 may determine whether the indication of the second gestures satisfies a pressure threshold (508). In some examples, keyboard module 122 determines, based on the indication of the second gesture, an initial portion of the second gesture that corresponds to an initial contact at a pressure-sensitive input device at which the second gesture was detected. Keyboard module 122 determines whether the amount of pressure associated with the initial portion of the second gesture satisfies the pressure threshold. For example, in response to the user providing a gesture at UID 102 to input the word "mother", keyboard module 122 determines whether the amount of pressure made during the user's initial contact with UID 102, i.e., associated with the beginning of the input ("mother") proximate to the location of the <M-key>, satisfies the pressure threshold.

Responsive to determining that the pressure information satisfies the pressure threshold, computing device 100 may determine a candidate word that includes a combination of the first sequence of one or more keys from the plurality of keys and the second sequence of one or more keys from the plurality of keys (510). For example, keyboard module 122 determines a candidate word "grandmother" which includes the combination of the first sequence selecting the <G-key>, the <R-key>, the <A-key>, the <N-key>, and the <D-key>) and the second sequence selecting the <M-key>, the <O-key>, the <T-key>, the <H-key>, the <E-key>, and the <R-key>, among others, based on the data received from UID 102.

Computing device 100 outputs, for display, the candidate word that includes the combination of the first sequence of one or more keys from the plurality of keys and the second sequence of one or more keys from the plurality of keys (512). For example, UI module 120 may cause UID 102 to present candidate word 130 (e.g., "grandmother") within an edit region of user interface 104.

Responsive to determining that the pressure information associated with the indication of the second gesture does not satisfy the pressure threshold, computing device 100 may determine a candidate word that includes the first sequence of one or more keys from the plurality of keys and not the second sequence of one or more keys from the plurality of keys (514). Computing device 100 may refrain from outputting, for display, the candidate word that includes the combination of the first sequence of one or more keys from the plurality of keys and the second sequence of one or more keys from the plurality of keys (516). For example, keyboard module 122 determines the candidate word "grand" based on the first sequence of keys, and which does not include the second sequence of keys selecting the <M-key>, the <O-key>, the <T-key>, the <H-key>, the <E-key>, and the <R-key>, among others. Computing device 100 may output, for display, the candidate word that includes the first sequence of one or more keys from the plurality of keys (518). For example, keyboard module 122 may cause UI module 120 to output the candidate word "grand" within an edit region of user interface 104.

In some examples, further responsive to determining that the pressure information associated with the indication of the second gesture does not satisfy the pressure threshold, computing device 100 may determine a second candidate word that includes the second sequence of one or more keys from the plurality of keys. Computing device 100 may further, after outputting, for display, the second candidate word that includes the first sequence of one or more keys from the plurality of keys, output, for display, the second candidate word that includes the second sequence of one or more keys from the plurality of keys. For example, keyboard module 122 may cause UI module 120 to output the candidate word "mother" after determining and displaying the candidate word "grand." As such, in this example, computing device 100 may output for display character strings for "grand" and for "mother" as separate words based on the determination that the second gesture does not satisfy the pressure threshold.

Certain aspects of the present disclosure, such as in the description of FIG. 5, describe an input technique that is based on pressure information associated with an indication of a gesture input, i.e., a determination of whether the pressure information associated with the indication of the gesture input satisfies a pressure threshold. In response to determining that the pressure information associated with a second gesture input satisfies the pressure threshold, some embodiments determine a candidate word that includes a combination of a first sequence of keys and a second sequence of keys. It should be recognized that alternative embodiments may allow for other uses of the pressure information. In other embodiments, in response to determining that the pressure information does not satisfy the pressure threshold, the computing device determines a candidate word that includes a combination of the first sequence of keys and the second sequence of keys.

In another embodiment of the present disclosure, computing device 100 may be configured to use pressure information associated with touch input on a graphical keyboard to enter input indicating a word delimiter, such as a whitespace character (sometimes referred to as a "space" character), or other punctuation. In some languages, whitespace is a common character found within many text sequences. For example, assuming the average length of English language words without a whitespace is 4 letters, which means a user can enter a whitespace character every four characters. As such, embodiments of the present disclosure provide a technique for entering whitespace input, improving input efficiency and input speed, for both touch typing and gesture typing.

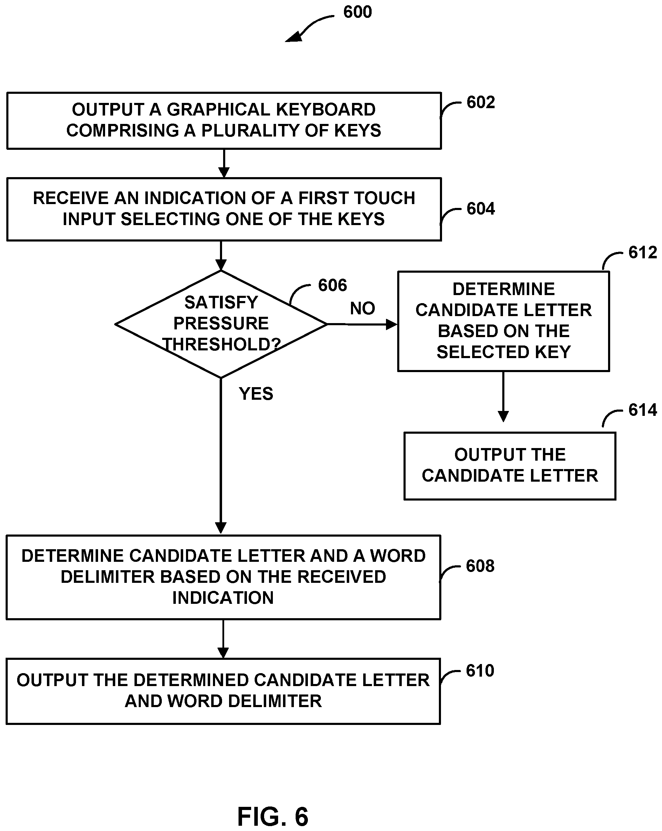

FIG. 6 is a flowchart illustrating another example operation 600 of the computing device, in accordance with one or more aspects of the present disclosure. The process of FIG. 6 may be performed by one or more processors of a computing device, such as computing device 100 illustrated in FIG. 1 and FIG. 2. For purposes of illustration only, FIG. 6 is described below within the context of computing device 100 of FIG. 1 and FIG. 2.

In another embodiment of the present disclosure, computing device 100 may be configured to insert word delimiter characters based on gesture input on a graphical keyboard. Similar to the examples described above, the exertion of a forceful pressure (e.g., exceeding a particular threshold) during a gesture input may in some examples indicate an end to a current word, and that subsequent gesture input (e.g., finger movement) is inputting a subsequent word, without requiring the user to select a word delimiter key (e.g., space bar) between word inputs. The described technique may therefore allow a user to continuously enter multiple words without moving the input object (e.g., finger) to the space bar, or lifting the input up at the end of a word. For example, to enter "thank you" with gesture typing, the user traces the following 8 letters "thankyou" on the keyboard and applies a "high" pressure (e.g., exceeding a pressure threshold) at the end of the first word, which is the letter "k". In some examples, while the user provides a gesture at UID 102 to input the word "thank", UI module 120 and keyboard module 122 may receive data from UID 102 about the input as indication of a gesture selecting a sequence of keys including the <T-key>, the <H-key>, the <A-key>, the <N-key>, and the <K-key>. Keyboard module 122 may determine that pressure information included in the gesture indication indicates that an exertion of force on UID 102 while an input object (e.g., finger) is proximate to the <K-key>, and in response, determine the candidate word based on the selection of keys up until the <K-key>. Keyboard module 122 may proceed to output, for display, the candidate word "thank", along with a word delimiter (e.g., whitespace) to an edit region of user interface 104 and treat subsequent input (e.g., to select the <Y-key>, the <O-key>, and the <U-key> as input for determining and displaying a subsequent word "you" in the edit region of user interface 104. For example, consider the operations of FIG. 6.

FIG. 6 illustrates that computing device 100 may output a graphical keyboard comprising a plurality of keys (602). For example, UI module 120 of computing device 100 may cause UID 102 to present a graphical user interface 104 that includes the graphical keyboard.

Computing device 100 may receive an indication of a first touch input selecting one or more keys of the plurality of keys of the graphical keyboard (604). For example, the user of computing device 100 may tap a sequence of keys for the words "thank" on the graphical keyboard, with a "forceful" pressure (e.g., exceeding a pressure threshold) placed on the "K" key, the last key of the word. While the user provides the touch input at UID 102 to input the word "thank," UI module 120 and keyboard module 122 may receive data from UID 102 about the input as an indication of touch input selecting the keys of the graphical keyboard, including the <T-key>, the <H-key>, the <A-key>, the <N-key>, and the <K-key>.

Computing device 100 may determine whether the received indication of the first touch input selecting one or more keys of the plurality of keys of the graphical keyboard satisfies a pressure threshold (606). For example, keyboard module 122 determines whether the amount of pressure associated with a touch event containing key-press event satisfies the pressure threshold.

Responsive to determining that the indication of the first touch input does not satisfy the pressure threshold, computing device 100 may determine a candidate letter based on the selected key (612). For example, in response to determining that the touch events associated with key-press of any of the keys including <T-key>, the <H-key>, the <A-key>, and the <N-key>, do not satisfy the pressure threshold, keyboard module 122 may determine the candidate letters "t", "h", "a", and "n", respectively.

Computing device 100 may output, for display, the candidate letter (614). For example, keyboard module 122 may cause UI module 120 to output the candidate letter "t" within an edit region of user interface 104.

Responsive to determining that the indication of the first touch input does satisfy the pressure threshold, computing device 100 may determine a candidate letter and a word delimiter based on the received indication (608). For example, in response to determining that the touch event associated with a key-press of the <K-key> exceeds the pressure threshold, keyboard module 122 determines the candidate letter "k" and a word delimiter are the user input. In some examples, the word delimiter may be a whitespace character (e.g., space, tab, new line, or other whitespace character), although other characters including punctuation (such as a period or comma) may be used.

Computing device 100 may output the determined candidate letter and the word delimiter (610). For example, keyboard module 122 may cause UI module 120 to output the character "k" concatenated with a whitespace character within an edit region of user interface 104. In some examples, keyboard module 122 may generate a graphical indication to signal to the user that the whitespace character has been automatically generated and inserted into the edit region of user interface 104. As a result of the described technique, the user does not need to separately entire a whitespace character to separate the words "thank" and "you" by tapping a spacebar key on the graphical keyboard, and can instead proceed directly to providing touch input on the first letter of the next word, i.e., the <Y-key>.

The described techniques may offer technical solutions for both touch typing and gesture typing forms of keyboard input. For touch typing, the keyboard module 122 does not require a user to need to enter the space bar keypress, saving the finger travel distance, and improving the input speed. For gesture typing, the described keyboard module may allow a user to enter multiple words without traveling finger to space bar or lifting finger at the end of each word.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to nontransient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used may refer to any of the foregoing structure or any other structure suitable for implementation of the techniques described. In addition, in some aspects, the functionality described may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described. These and other examples are within the scope of the following claims.

## Claims

1. A method comprising:
outputting (502), by a computing device and for display, a graphical keyboard comprising a plurality of keys;
receiving (504), by the computing device, an indication of a first gesture selecting a first sequence of one or more keys from the plurality of keys;
receiving (506), by the computing device, an indication of a second gesture selecting a second sequence of one or more keys from the plurality of keys; and
determining (510), by the computing device and based on pressure information associated with the indication of the second gesture, a candidate word that includes a combination of the first sequence of one or more keys from the plurality of keys and the second sequence of one or more keys from the plurality of keys; and
outputting (512), by the computing device and for display, the candidate word that includes the combination of the first sequence of one or more keys from the plurality of keys and the second sequence of one or more keys from the plurality of keys.

2. The method of claim 1, wherein determining the candidate word further comprises:
determining whether the pressure information associated with the indication of the second gesture satisfies a pressure threshold; and
responsive to determining that the pressure information satisfies the pressure threshold, determining the candidate word that includes the combination of the first sequence of one or more keys from the plurality of keys and the second sequence of one or more keys from the plurality of keys.

3. The method of claim 2, further comprising:
responsive to determining that the pressure information does not satisfy the pressure threshold:
determining, by the computing device, a candidate word that includes the first sequence of one or more keys from the plurality of keys and not the second sequence of one or more keys from the plurality of keys; and
outputting, by the computing device and for display, the candidate word that includes the first sequence of one or more keys from the plurality of keys.

4. The method of claim 3, wherein the determined candidate word comprises a first candidate word, the method further comprising:
further responsive to determining that the pressure information does not satisfy the pressure threshold:
determining, by the computing device, a second candidate word that includes the second sequence of one or more keys from the plurality of keys; and
after outputting, for display, the first candidate word that includes the first sequence of one or more keys from the plurality of keys, outputting, by the computing device, for display, the second candidate word that includes the second sequence of one or more keys from the plurality of keys.

5. The method of any one of claims 1-4, further comprising:
determining, by the computing device, based on the indication of the second gesture, an initial portion of the second gesture that corresponds to an initial contact at a pressure-sensitive input device at which the second gesture was detected, the pressure-sensitive input device being operatively coupled to the computing device; and
determining that an amount of pressure associated with the initial portion of the second gesture does not satisfy a pressure threshold.

6. The method of any one of claims 1-5, wherein receiving the indication of the second gesture selecting the second sequence of one or more keys from the plurality of keys further comprises:
receiving, by the computing device, a plurality of touch events corresponding to the second sequence of the one or more keys from the plurality of keys, wherein at least one of the touch events includes the pressure information.

7. The method of any one of claims 1-6, further comprising:
outputting, by the computing device and for display, a graphical annotation to the candidate word indicating that the candidate word was determined based on multiple gesture inputs.

8. The method of any one of claims 1-7, wherein:
the second gesture is received subsequent to the first gesture and is distinct from the first gesture.

9. A computing device (100; 300) comprising at least one processor (202) configured to perform any one of the methods of claims 1-8.

10. A system comprising means for performing any one of the methods of claims 1-8.

11. A computer-readable storage medium (210) encoded with instructions that, when executed, cause at least one processor (202) of a computing device (100; 300) to perform any one of the methods of claims 1-8.

## Patentansprüche

1. Verfahren, umfassend:
Ausgeben (502), durch ein Computergerät und zum Anzeigen, einer grafischen Tastatur, die eine Vielzahl von Tasten umfasst;
Empfangen (504), durch das Computergerät, einer Indikation einer ersten Geste, die eine erste Sequenz von einer oder mehreren Tasten aus der Vielzahl von Tasten auswählt;
Empfangen (506), durch das Computergerät, einer Indikation einer zweiten Geste, die eine zweite Sequenz von einer oder mehreren Tasten aus der Vielzahl von Tasten auswählt; und
Ermitteln (510), durch das Computergerät und basierend auf mit der Indikation der zweiten Geste assoziierten Druckinformationen, eines in Frage kommenden Wortes, das eine Kombination aus der ersten Sequenz von einer oder mehreren Tasten aus der Vielzahl von Tasten und der zweiten Sequenz von einer oder mehreren Tasten aus der Vielzahl von Tasten beinhaltet; und
Ausgeben (512), durch das Computergerät und zum Anzeigen, des in Frage kommenden Wortes, das die Kombination aus der ersten Sequenz von einer oder mehreren Tasten aus der Vielzahl von Tasten und der zweiten Sequenz von einer oder mehreren Tasten aus der Vielzahl von Tasten beinhaltet.

2. Verfahren nach Anspruch 1, wobei das Ermitteln des in Frage kommenden Wortes ferner umfasst:
Ermitteln, ob die mit der Indikation der zweiten Geste assoziierten Druckinformationen einen Druckschwellenwert erfüllen; und
in Reaktion auf das Ermitteln, dass die Druckinformationen den Druckschwellenwert erfüllen, Ermitteln des in Frage kommenden Wortes, das die Kombination aus der ersten Sequenz von einer oder mehreren Tasten aus der Vielzahl von Tasten und der zweiten Sequenz von einer oder mehreren Tasten aus der Vielzahl von Tasten beinhaltet.

3. Verfahren nach Anspruch 2, ferner umfassend:
in Reaktion auf das Ermitteln, dass die Druckinformationen den Druckschwellenwert nicht erfüllen:
Ermitteln, durch das Computergerät, eines in Frage kommenden Wortes, das die erste Sequenz von einer oder mehreren Tasten aus der Vielzahl von Tasten und nicht die zweite Sequenz von einer oder mehreren Tasten aus der Vielzahl von Tasten beinhaltet; und
Ausgeben, durch das Computergerät und zum Anzeigen, des in Frage kommenden Wortes, das die erste Sequenz von einer oder mehreren Tasten aus der Vielzahl von Tasten beinhaltet.

4. Verfahren nach Anspruch 3, wobei das ermittelte in Frage kommende Wort ein erstes in Frage kommendes Wort umfasst, das Verfahren ferner umfassend:
ferner in Reaktion auf das Ermitteln, dass die Druckinformationen den Druckschwellenwert nicht erfüllen:
Ermitteln, durch das Computergerät, eines zweiten in Frage kommenden Wortes, das die zweite Sequenz von einer oder mehreren Tasten aus der Vielzahl von Tasten beinhaltet; und
nach dem Ausgeben, zum Anzeigen, des ersten in Frage kommenden Wortes, das die erste Sequenz von einer oder mehreren Tasten aus der Vielzahl von Tasten beinhaltet, Ausgeben, durch das Computergerät, zum Anzeigen, des zweiten in Frage kommenden Wortes, das die zweite Sequenz von einer oder mehreren Tasten aus der Vielzahl von Tasten beinhaltet.

5. Verfahren nach einem der Ansprüche 1-4, ferner umfassend:
Ermitteln, durch das Computergerät, basierend auf der Indikation der zweiten Geste, eines anfänglichen Teils der zweiten Geste, der einem anfänglichen Kontakt an einem druckempfindlichen Eingabegerät entspricht, an dem die zweite Geste erkannt wurde, wobei das druckempfindliche Eingabegerät operativ mit dem Computergerät gekoppelt ist; und
Ermitteln, dass ein mit dem anfänglichen Teil der zweiten Geste assoziierter Druckwert einen zweiten Druckschwellenwert nicht erfüllt.

6. Verfahren nach einem der Ansprüche 1-5, wobei das Empfangen der Indikation der zweiten Geste, die die zweite Sequenz einer oder mehrerer Tasten aus der Vielzahl von Tasten auswählt, ferner umfasst:
Empfangen, durch das Computergerät, einer Vielzahl von Berührungsereignissen, die der zweiten Sequenz der einen oder mehreren Tasten aus der Vielzahl von Tasten entsprechen, wobei zumindest eines der Berührungsereignisse die Druckinformationen beinhaltet.

7. Verfahren nach einem der Ansprüche 1-6, ferner umfassend:
Ausgeben, durch das Computergerät und zum Anzeigen, einer grafischen Anmerkung zu dem in Frage kommenden Wort, die angibt, dass das in Frage kommende Wort basierend auf mehreren Gesteneingaben ermittelt wurde.

8. Verfahren nach einem der Ansprüche 1-7, wobei:
die zweite Geste nach der ersten Geste empfangen wird und sich von der ersten Geste unterscheidet.

9. Computergerät (100; 300), das zumindest einen Prozessor (202) umfasst, der konfiguriert ist, eines der Verfahren nach Ansprüchen 1-8 durchzuführen.

10. System, umfassend Mittel zum Durchführen eines der Verfahren nach den Ansprüchen 1-8.

11. Computerlesbares Speichermedium (210), das mit Anweisungen programmiert ist, die bei Ausführung den zumindest einen Prozessor (202) eines Computergeräts (100; 300) veranlassen, eines der Verfahren nach den Ansprüchen 1-8 auszuführen.

## Revendications

1. Procédé comprenant :
la fourniture en sortie (502), par un dispositif informatique et pour affichage, d'un clavier graphique comprenant une pluralité de touches ;
la réception (504), par le dispositif informatique, d'une indication d'un premier geste sélectionnant une première séquence d'une ou de plusieurs touches parmi la pluralité de touches ;
la réception (506), par le dispositif informatique, d'une indication d'un deuxième geste sélectionnant une deuxième séquence d'une ou de plusieurs touches parmi la pluralité de touches ; et
la détermination (510), par le dispositif informatique et sur la base d'informations de pression associées à l'indication du deuxième geste, d'un mot candidat qui comporte une combinaison de la première séquence d'une ou de plusieurs touches parmi la pluralité de touches et de la deuxième séquence d'une ou de plusieurs touches parmi la pluralité de touches ; et
la fourniture en sortie (512), par le dispositif informatique et pour affichage, du mot candidat qui comporte la combinaison de la première séquence d'une ou de plusieurs touches parmi la pluralité de touches et de la deuxième séquence d'une ou de plusieurs touches parmi la pluralité de touches.

2. Procédé selon la revendication 1, dans lequel la détermination du mot candidat comprend en outre :
le fait de déterminer si les informations de pression associées à l'indication du deuxième geste satisfont un seuil de pression ; et
en réponse à la détermination du fait que les informations de pression satisfont le seuil de pression, la détermination du mot candidat qui comporte la combinaison de la première séquence d'une ou de plusieurs touches parmi la pluralité de touches et de la deuxième séquence d'une ou de plusieurs touches parmi la pluralité de touches.

3. Procédé selon la revendication 2, comprenant en outre :
en réponse à la détermination du fait que les informations de pression ne satisfont pas le seuil de pression :
la détermination, par le dispositif informatique, d'un mot candidat qui comporte la première séquence d'une ou de plusieurs touches parmi la pluralité de touches et pas la deuxième séquence d'une ou de plusieurs touches parmi la pluralité de touches ; et
la fourniture en sortie, par le dispositif informatique et pour affichage, du mot candidat qui comporte la première séquence d'une ou de plusieurs touches parmi la pluralité de touches.

4. Procédé selon la revendication 3, dans lequel le mot candidat déterminé comprend un premier mot candidat, le procédé comprenant en outre :
en réponse supplémentaire à la détermination du fait que les informations de pression ne satisfont pas le seuil de pression :
la détermination, par le dispositif informatique, d'un deuxième mot candidat qui comporte la deuxième séquence d'une ou de plusieurs touches parmi la pluralité de touches ; et
après la fourniture en sortie, pour affichage, du premier mot candidat qui comporte la première séquence d'une ou de plusieurs touches parmi la pluralité de touches, la fourniture en sortie, par le dispositif informatique, pour affichage, du deuxième mot candidat qui comporte la deuxième séquence d'une ou de plusieurs touches parmi la pluralité de touches.

5. Procédé selon l'une quelconque des revendications 1 à 4, comprenant en outre :
la détermination, par le dispositif informatique, sur la base de l'indication du deuxième geste, d'une partie initiale du deuxième geste qui correspond à un contact initial au niveau d'un dispositif d'entrée sensible à la pression au niveau duquel le deuxième geste a été détecté, le dispositif d'entrée sensible à la pression étant couplé fonctionnellement au dispositif informatique ; et
la détermination du fait qu'une quantité de pression associée à la partie initiale du deuxième geste ne satisfait pas un seuil de pression.

6. Procédé selon l'une quelconque des revendications 1 à 5, dans lequel la réception de l'indication du deuxième geste sélectionnant la deuxième séquence d'une ou de plusieurs touches parmi la pluralité de touches comprend en outre :
la réception, par le dispositif informatique, d'une pluralité d'événements tactiles correspondant à la deuxième séquence des une ou plusieurs touches parmi la pluralité de touches, dans lequel au moins l'un des événements tactiles comporte les informations de pression.

7. Procédé selon l'une quelconque des revendications 1 à 6, comprenant en outre :
la fourniture en sortie, par le dispositif informatique et pour affichage, d'une annotation graphique apportée au mot candidat indiquant que le mot candidat a été déterminé sur la base de multiples entrées de geste.

8. Procédé selon l'une quelconque des revendications 1 à 7, dans lequel :
le deuxième geste est reçu à la suite du premier geste et est distinct du premier geste.

9. Dispositif informatique (100 ; 300) comprenant au moins un processeur (202) configuré pour réaliser l'un quelconque des procédés des revendications 1 à 8.

10. Système comprenant des moyens pour réaliser l'un quelconque des procédés selon les revendications 1 à 8.

11. Support de stockage lisible par ordinateur (210) codé avec des instructions qui, lorsqu'elles sont exécutées, amènent au moins un processeur (202) d'un système informatique (100 ; 300) à réaliser l'un quelconque des procédés des revendications 1 à 8.
